# EUROPEAN PATENT APPLICATION

(11) **EP 1 475 935 A2**
(43) Date of publication of application: **10.11.2004**
(21) Application number: 04252637.6
(22) Date of filing: 06.05.2004
(51) Int. Cl.: H04L 27/18, H04L 27/00

(54) **UWB transmission using DPSK**

(30) Priority: 06.05.2003 KR 2003028734
(71) Applicant: Samsung Electronics Co., Ltd., Suwon-si, Gyeonggi-do (KR)
(72) Inventor: Choi, Yun-hwa, Songpa-gu Seoul (KR)
(74) Representative: Robinson, Ian Michael

(57) **Abstract**

An apparatus and method for transmitting and/or receiving ultra wideband (UWB) signals using differential phase shift keying (DPSK). A UWB transmitter includes a DPSK conversion unit (10) for converting a first bitstream (data stream) by DPSK into a second bitstream, a modulation unit (20) for generating UWB wavelet series based on the second bitstream, allowing the phase difference to be 180 degrees between the bit of 0 and the bit of 1, and an RF module for transmitting the generated UWB wavelet series through a wireless channel. A UWB receiver includes an RF module for receiving UWB wavelet series transmitted through a wireless channel, a time delay unit (40) for delaying the UWB wavelet series received though the RF module for time period corresponding to an inter-pulse space, and a demodulation unit (50) for demodulating data stream based on a correlation of the UWB wavelet series received through the RF module and the delayed UWB wavelet series passing through the time delay unit (40).

## Description

The present invention relates to a method and apparatus for transferring and receiving ultra wideband (UWB) signals, and more particularly, to a method and apparatus for transferring and receiving UWB signals using a differential phase shift keying (DPSK) scheme.

Wireless communication devices have recently become popular with the rapid development of wireless communication technologies. This has brought a lot of changes in people's lifestyles. In particular, much effort has been made in research on UWB communications capable of implementing high-speed wideband wireless communications and simultaneously providing existing wireless communication services a without need for any additional frequency resources.

In UWB communications, information is transmitted and received using short pulses (namely, wavelets). Since extremely short pulses are used, the bandwidth of UWB pulse signals in a frequency domain may be as broad as several GHz. Since the ultra wideband is used, UWB signals have a power level below a noise level in the frequency domain, whereby it can be used without affecting other communication devices. In addition, UWB pulse signals have very low duty cycles. Thus, communications using UWB signals are advantageous in that data transfer rate is very high, multiple accesses can be made, and interference effects due to multiple paths can be reduced.

UWB communication can be used in a variety of fields. One of the fields currently at issue is high speed local area network (LAN) communications in the range of several meters to scores of meters. If UWB communication is actually put into practical use, it becomes possible to transfer super high definition images, such as high definition digital broadcast images or digital versatile disc (DVD) images, with wireless streaming data between audio and video (AV) household electric devices.

There are several schemes for modulating signals for UWB communication including pulse position modulation (PPM) using a position change of a UWB pulse (wavelet) based on time, pulse amplification modulation (PAM) using the size of a pulse, phase shift keying (PSK) such as binary phase shift keying (BPSK) or quadrature phase shift keying (QPSK), and orthogonal frequency division modulation (OFDM), and combinations thereof, e.g., combination of BPSK and PPM, and the like.

In the above-described schemes, the circuit for synchronization of UWB pulses, having very short cycles, is very complicated. Especially, where frequency hopping is applied in multiple bands, a receiving terminal may have difficulty in receiving UWB signals according to sharp changes in the frequency. Accordingly, there have been attempts to detect the frequency hopping by operating all of the receiving units relative to respective subbands. However, there is still a need to use the complicated circuit.

According to the present invention there is provided an apparatus and method as set forth in the appended claims. Preferred features of the invention will be apparent from the dependent claims, and the description which follows.

In view of the above-described problem, the present invention provides an apparatus and method having a comparatively simple implementation are provided for transferring and receiving UWB signals utilizing DPSK.

According to an exemplary embodiment of the present invention, there is provided a UWB transmitter comprising a DPSK conversion unit converting a first bitstream (data stream) via DPSK into a second bitstream, a modulation unit generating UWB wavelet series from the second bitstream, allowing the phase difference to be 180 degrees between the bit of 0 and the bit of 1, and an RF module transmitting the generated UWB wavelet series through a wireless channel.

According to an exemplary embodiment of the present invention, there is provided a UWB receiver comprising an RF module receiving UWB wavelet series transmitted through a wireless channel, a time delay unit delaying the UWB wavelet series received though the RF module for time period corresponding to an inter-pulse space, and a demodulation unit demodulating data stream based on a correlation of the UWB wavelet series received through the RF module and the delayed UWB wavelet series passing through the time delay unit.

According to an exemplary embodiment of the present invention, there is provided a UWB transceiver comprising a DPSK conversion unit converting a first bitstream (data stream) via DPSK mode into a second bitstream, a modulation unit generating UWB wavelet series from the second bitstream, allowing the phase difference to be 180 degrees between the bit of 0 and the bit of 1, an RF module transmitting the generated UWB wavelet series through a wireless channel and receiving the UWB wavelet series through the wireless channel, a time delay unit delaying the UWB wavelet series received though the RF module for a time period corresponding to an inter-pulse space, and a demodulation unit demodulating data stream based on a correlation of the UWB wavelet series received through the RF module and the delayed UWB wavelet series passing through the time delay unit.

The UWB pulse series generated or received in the UWB transmitter, receiver and transceiver may be UWB signals in a single band and in multiple bands, for example, UWB signals in the frequency hopping mode.

According to an exemplary embodiment of the present invention, there is provided a method for transmitting UWB signals comprising the steps of converting a first bitstream (data stream) by the DPSK mode into a second bitstream, generating UWB wavelet series with the second bitstream, allowing the phase difference to be 180 degrees between the bit of 0 and the bit of 1, and transmitting the generated UWB wavelet series through a wireless channel.

According to an exemplary embodiment of the present invention, there is provided a method for receiving UWB signals comprising the steps of receiving UWB wavelet series transmitted through a wireless channel, delaying the UWB wavelet series received though the RF module for a time period corresponding to an inter-pulse space, and demodulating data stream based on a correlation of the UWB wavelet series received through the RF module and the delayed UWB wavelet series passing through the time delay unit.

According to an exemplary embodiment of the present invention, there is provided a method for transmitting and receiving UWB signals comprising the steps of converting a first bitstream (data stream) by the DPSK mode into a second bitstream, generating UWB wavelet series with the second bitstream, allowing the phase difference to be 180 degrees between the bit of 0 and the bit of 1, transmitting the generated UWB wavelet series through a wireless channel and receiving the UWB wavelet series through the wireless channel.

The UWB pulse series generated or received in the UWB transmitter, receiver and transceiver may be UWB signals in a single band and in multiple bands, for example, UWB signals in the frequency hopping mode.

For a better understanding of the invention, and to show how embodiments of the same may be carried into effect, reference will now be made, by way of example, to the accompanying diagrammatic drawings in which:
Figure 1 is a block diagram of a UWB transceiver according to an exemplary of the present invention;
Figure 2A is a block diagram showing an exemplary embodiment of a DPSK conversion unit;
Figure 2B is a block diagram showing another exemplary embodiment of a DPSK conversion unit;
Figure 3 is a block diagram illustrating a detailed construction of a UWB demodulation unit according to an exemplary embodiment of the present invention;
Figure 4A is a flow chart showing a UWB transmission process according to an exemplary of the present invention;
Figure 4B is a flow chart showing a UWB reception process according to an exemplary of the present invention; and
Figure 5 is a graph showing a UWB wavelet series subjected to frequency hopping relative to time and frequency, and classified into four bands.

Hereinafter, the UWB communication method and apparatus according to the present invention will be described in detail with reference to the accompanying drawings.

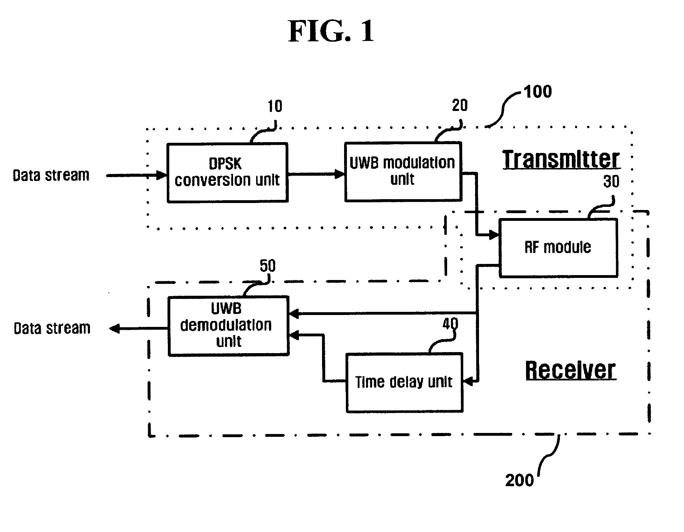

Figure 1 is a block diagram of a UWB transceiver according to an exemplary embodiment of the present invention.

A UWB transmitter 100 comprises a DPSK conversion unit 10 for receiving data stream and converting the data stream using DPSK, a UWB modulation unit 20 for generating a UWB wavelet series based on the DPSK converted bitstream, and an RF module 30 for transmitting the generated UWB wavelet series through a wireless channel.

A UWB receiver 200 comprises the RF module 30 for receiving a UWB wavelet series transmitted through a wireless channel, a time delay unit 40 for delaying the UWB wavelet series received by the RF module 30 for the predetermined period of time, and a UWB demodulation unit 50 for generating a data stream based on the UWB wavelet series received by the RF module 30 and the UWB wavelet series time delayed by the time delay unit 40.

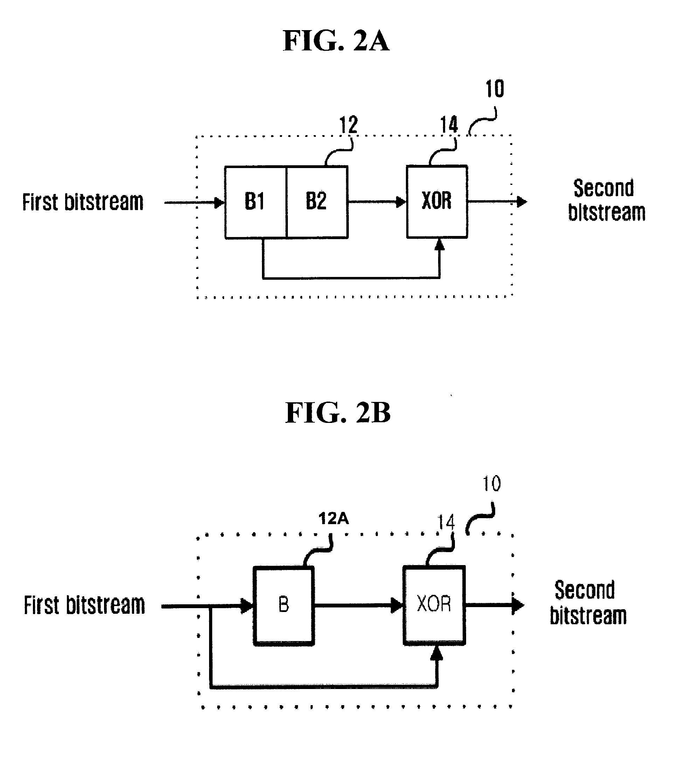

Figure 2A is a block diagram showing an exemplary embodiment of the DPSK conversion unit 10.

The DPSK conversion unit 10 comprises a buffer 12 for storing bits of a first bitstream (data stream) and a logic operation unit 14 for performing a logic operation. The buffer 12 shown in Figure 2A comprises a shift register capable of storing two bits in register positions B1 and B2. When data stream of 300 Mbps is input, a first of the bitstream is first stored in register position B1, and the first bit stored in register position B1 is input into register position B2 when the next bit of the bitstream is input into register position B1. The logic operation unit applies an XOR (exclusive OR) operation to the bit in register position B1 and the bit in register position B2, and the operation result is output as a second bitstream. The frequency of bit movement from register position B1 to register position B2 is 300 MHz and the output bitstream is also 300 Mbps. Where a change in bitstream is defined as 1 and no change in bitstream is defined as 0 in the DPSK conversion, the logic operation unit 14 may be realized as the XOR operation. Where a change in bitstream is defined as 0 and no change in bitstream is defined as 1, the logic operation unit may be realized as an XNOR (exclusive Not OR) operation. Hereafter, a change in bitstream will be defined as 1 and no change in bitstream will be defined as 0. However, the present invention may be implemented using another contrary definition.

It is assumed that initial values of register positions B1 and B2 are 1 and 0, respectively. In this case, the first bit of the second bitstream becomes 1 with XOR operation of 1 and 0. The output first bit of 1 has no relevance to the first bitstream (data stream), and merely functions as a reference bit for DPSK operation. Next, when a first bit of the first bitstream is input into register position B1 is 1, the bit of 1 previously stored in register position B1 is input into register position B2 and the XOR operation of both of them results in 1. Likewise, the second bitstream becomes 1 when the bit of the first bitstream changes, and the bit of the second bitstream becomes 0 when there is no change in the first bitstream.

As shown in Table 1, a phase of a UWB signal generated by the UWB modulation unit 20 is defined as 180 degrees where the bit of the second bitstream is 1 and 0 degrees where the bit of the second bitstream is 0. However, the present invention may be implemented using another contrary definition.

**Table 1**

| | | | | | | |
|---|---|---|---|---|---|---|
| First bitstream | | 1 | 0 | 1 | 1 | 0 |
| Second bitstream | 1 | 0 | 1 | 1 | 0 | 1 |
| Phase of UWB signal | 180 | 0 | 180 | 180 | 0 | 180 |

The DPSK conversion unit 10 may be also constructed as illustrated in the exemplary embodiment shown in Figure 2B. In this case, a buffer 12A stores therein one bit and the stored bit is subjected to an XOR operation with a next bit when the next bit is input to the buffer 12A. Alternatively, the buffer 12A may store several bits. As Figures 2A and 2B indicate, the DPSK conversion unit utilizes a buffer to store at least one bit in order to perform an XOR operation of two successive bits, where the XOR operation provides an indication of a bit change.

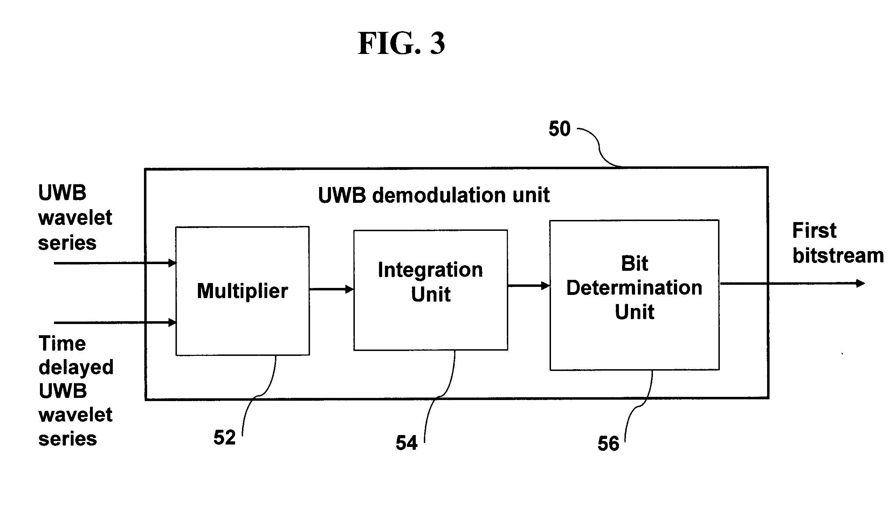

Figure 3 is a block diagram illustrating a detailed construction of the UWB demodulation unit 50 according to an exemplary embodiment of the present invention.

The UWB wavelet series received by the RF module 30 and the UWB wavelet series delayed through the time delay unit 40 are multiplied by a multiplier 52. The time delay provided by the time delay unit 40 corresponds to an inter-pulse space. In an exemplary embodiment of the present invention, the time delay unit 40 is constructed with a transmission line electrically long enough to provide the time delay corresponding to the inter-pulse space. If the UWB pulse signals passing through the time delay unit 40 and the signals immediately input in the RF module 30 are in phase (i.e., no phase difference), their product would be larger than 0. If they have a phase difference of 180 degrees, their product would be less than 0. However, even if both signals are actually in phase, there may be a time section less than 0 because of noise or a difference in transfer path of the two signals. Accordingly, the phase difference of two signals is determined by integrating signals for a time period corresponding to an inter-pulse space. The waveforms relative to the UWB wavelet series multiplied in the multiplier 52 and time delayed UWB wavelet series are integrated for the time period corresponding to the length of the inter-pulse space in an integration unit 54. A bit determination unit 56 determines whether the integrated values are larger or smaller than 0 per inter-pulse space. When the integrated value is larger than 0, it means that two signals have no change in phase, indicating a 0 bit. When the integrated value is smaller than 0, it means that two signals have a phase difference (namely, a phase difference of 180 degrees), indicating a 1 bit. The reception unit of the present invention does not require a complicated circuit to be adapted to synchronization of UWB pulse signals, for example, a phase lock loop (PLL) can be utilized, such that the reception unit can be realized with any simplified circuit.

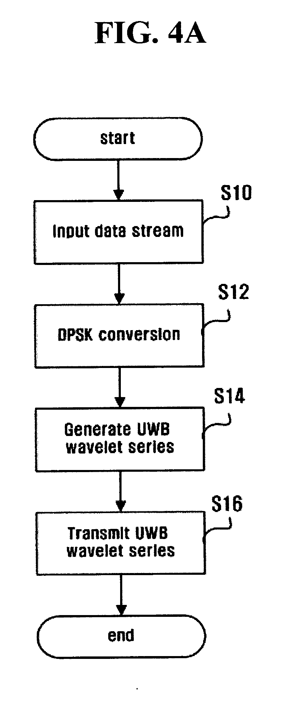

Figure 4A is a flow chart showing a UWB transmission process according to an exemplary embodiment of the present invention.

First, a data stream to be transmitted via UWB transmission is received (S10). The data stream may comprise data to be transmitted and data to be controlled. The channel-encoded data stream may also comprise residual bits for error correction added thereto.

The received data stream is converted in DPSK mode (S12). DPSK conversion may cause two states: a bit change in bitstream and no bit change in bitstream. Where a bit change is defined as 1, 0 is continuously output in the state of no bit change in bitstream. It does not matter whether the first bit output as a result of DPSK conversion is 1 or 0. Since the first bit output has no relevance to the received data stream, the first bit output becomes the reference bit. For example, if a bitstream of "10110" is converted in the DPSK mode, a bitstream of "101101" is output. At this time, the first bit output by the DPSK conversion becomes the reference bit. When the received data stream is compared with the reference bit, the first bit is 1, showing no bit change, and thus 0 is output and the first bit of 1 becomes the reference bit.

UWB wavelet series is generated based on the DPSK converted bitstream (S14). The UWB wavelet series may be designed to have the phase of 180 degrees when the bitstream has the bit of 1, and to have the phase of 0 degrees when it has the bit of 0, and vice versa.

Lastly, the generated UWB wavelet series are transmitted to a wireless channel (S16).

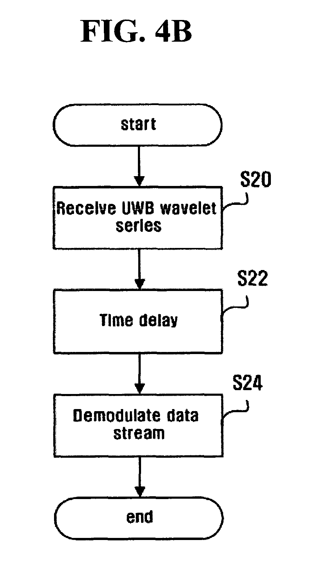

Figure 4B is a flow chart showing a UWB reception process according to an exemplary embodiment of the present invention.

A UWB wavelet series is first received by a wireless channel (S20). The received UWB wavelet series is subjected to a time delay corresponding to the inter-pulse space (S22). In an exemplary embodiment of the present invention, time delay can be made by allowing UWB pulse signals to pass through a transmission line having an electric distance which provides the time delay corresponding to the inter-pulse space. For example, if a UWB signal has an inter-pulse space of 1 ns, a time delay of 1 ns is generated by a transmission line having an electric distance of 30 cm. The data stream is demodulated based on the time delayed UWB wavelet series and the received UWB wavelet series (S24). In the DPSK modulation mode, the bit involved in modulation of a signal is determined by a phase difference between a previous signal and a next signal. The phase difference between the time delayed UWB wavelet series (previous signal) and the received UWB wavelet series (next signal) is obtained such that the bit is determined to be 1 where the obtained phase difference is 180 degrees and the bit is determined to be 0 where the phase difference is 0 degrees. In the case of pulses having identical phases between two wavelet series, the bit should be ideally larger than 0 in all of the time sections but there may actually appear sections having less than 0 bit due to noise and the like. Thus, intervals between pulse lengths are integrated. If the integrated value is larger than 0, the two signals are determined to be in phase. Since there is no change in phase, it indicates the bit is 0. Otherwise, if the integrated value is smaller than 0, the two signals are determined to have a phase difference of 180 degrees, indicating the bit is 1.

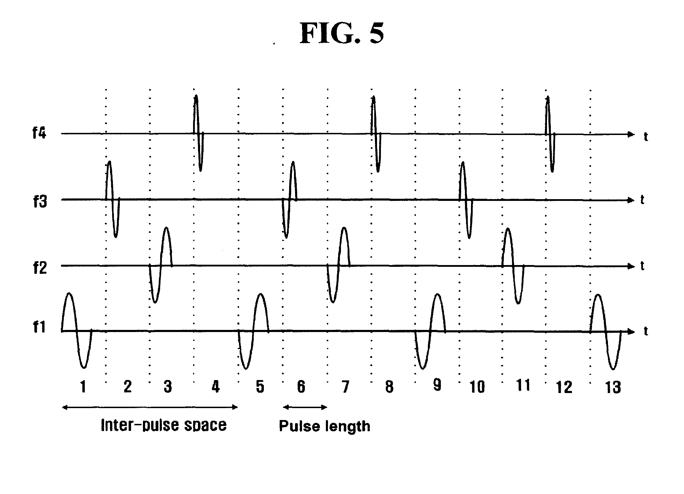

Figure 5 is a graph showing an exemplary UWB wavelet series subjected to frequency hopping relative to time and frequency, and classified into four bands.

The present invention is mainly employed in the case of a single band but may also be employed in the case of multiple bands. Figure 5 shows transmission of data with a UWB pulse signal having four bands (center frequencies f1, f2, f3 and f4) through a frequency hopping mode. The frequency hopping pattern in Figure 5 is progressed in the sequence of f1, f3, f2 and f4. In the case of a single band, it has no actual benefit to classify pulse length and inter-pulse space. However, there is an actual benefit in the case of multiple bands. A pulse length is defined as the length occupied by a band prior to the frequency hopping on the time axis. The pulse length may be defined on the basis of an inter-pulse space in the same band. In the simplest manner, the UWB wavelet series can be generated by classifying phases based on DPSK converted bitstream when the present invention is employed in multiple bands.

For example, the bitstreams in Figure 5 become 1 (f1, 0 degrees), 0 (f3, 0 degrees), 1 (f2, 180 degrees) and 0 (f4, 0 degrees). A total of 13 waveforms are shown. The waveforms at times 1, 5, 9 and 13 have the frequency of f1, and bits are generated through comparison between them. Likewise, the waveforms at times 3, 7 and 11 have the frequency of f2, and bits generated through comparison between them. In the case of multiple bands, the first pulses of each band become the reference pulses. In Figure 5, if the waveform at time 1 is assumed to be the first waveform, the waveforms at times 2, 3 and 4 become the reference waveforms. If the waveform at time 1 is delayed as much as the inter-pulse space, it exists on the same time as the pulse in 5. If the two signals having the phase difference of 180 degrees are multiplied and then integrated for the inter-pulse space, the resultant value is smaller than 0. The bit indicated by the waveform in 5 has the phase difference of 180 degrees and it becomes 1 because the phase difference is 180 degrees. Then, since the waveforms in 3 and 7 are the same phase, the phase difference becomes 1 and the waveforms at times 4 and 8 become 0. To calculate the waveforms at times 5 though 13 continuously in this manner, "110001101" is obtained. According to the present invention, when a UWB signal classified into n bands is transmitted, a UWB pulse as the reference waveform is transmitted by each band, and then the UWB pulse can be transmitted with information carrying bits.

In the above-described exemplary embodiment, a UWB signal transmitted in multiple bands can be received and demodulated by use of a single reception unit comprising a time delay unit and a UWB demodulation unit, whereby the present invention is not limited. The technical idea of the present invention includes the case of respective bands in parallel.

As described above, an apparatus and a method for transmitting and receiving UWB signals according to the present invention can have a simplified construction by use of DPSK conversion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An ultra wideband (UWB) transmitter comprising:
a differential phase shift keying (DPSK) conversion unit (10) for subjecting a first bitstream to DPSK to generate a second bitstream;
a modulation unit (20) for generating a UWB wavelet series based on the second bitstream generated by the DPSK conversion unit (10), wherein a phase difference between wavelets of the UWB wavelet series is defined as 180 degrees if a bit of the second bitstream is 1 and 0 degrees if the bit of the second bitstream is 0; and
a transmission module (30) for transmitting the UWB wavelet series via a wireless channel.

2. The UWB transmitter as claimed in claim 1, wherein the DPSK conversion unit (10) comprises:
a buffer (12) for storing at least one bit of the first bitstream; and
an operation unit (14) performing an XOR operation on the bit stored in the buffer (12) and a next bit of the first bitstream, and outputting a result of the XOR operation.

3. The UWB transmitter as claimed in claim 1 or 2, wherein the transmission module (30) transmits the wavelets of the UWB wavelet series in multiple frequency bands.

4. An ultra wideband (UWB) receiver comprising:
a reception module (30) for receiving a UWB wavelet series transmitted through a wireless channel and outputting the UWB wavelet series;
a time delay unit (40) for delaying the UWB wavelet series output by the reception module (30) for a time period corresponding to an inter-pulse space and outputting a delayed UWB wavelet series; and
a demodulation unit (50) for generating a data stream based on a correlation of the UWB wavelet series output by the reception module (30) and the delayed UWB wavelet series output by the time delay unit (40).

5. The UWB receiver as claimed in claim 4, wherein the demodulation unit (50) comprises:
a multiplier (52) for multiplying the UWB wavelet series by the delayed UWB wavelet series;
an integration unit (54) for integrating a product of the UWB wavelet series and the delayed UWB wavelet series for a time period corresponding to a UWB inter-pulse space, and outputting an integrated result; and
a bit determination unit (56) for generating bits of the data stream based on the integrated result, wherein a bit of 0 is generated when the integrated result is larger than 0 and a bit of 1 is generated when the integrated result is smaller than 0.

6. The UWB receiver as claimed in claim 4 or 5, wherein the time delay unit (40) comprises a transmission line having an electrical length providing a time delay corresponding to the UWB inter-pulse space.

7. The UWB receiver as claimed in claim 4, 5 or 6, wherein the UWB wavelet series received by the reception unit (30) is a multiple band UWB wavelet series whose frequency band changes by pulse.

8. An ultra wideband (UWB) transceiver comprising:
a differential phase shift keying (DPSK) conversion unit (10) for subjecting a first bitstream to DPSK to generate a second bitstream;
a modulation unit (20) generating a first UWB wavelet series based on the second bitstream generated by the DPSK conversion unit (10), wherein a phase difference between wavelets of the first UWB wavelet series is defined as 180 degrees if a bit of the second bitstream is 1 and 0 degrees if the bit of the second bitstream is 0;
a transmission and reception module (30) for transmitting the first UWB wavelet series via a wireless channel, receiving a second UWB wavelet series via the wireless channel, and outputting the second UWB wavelet series;
a time delay unit (40) for delaying the second UWB wavelet series output by the transmission and reception module (30) for a time period corresponding to an inter-pulse space and outputting a delayed UWB wavelet series; and
a demodulation unit (50) for generating a data stream based on a correlation of the second UWB wavelet series output by the transmission and reception module (30) and the delayed UWB wavelet series output by the time delay unit (40).

9. The UWB transceiver as claimed in claim 8, wherein the DPSK conversion unit (10) comprises:
a buffer (12) for storing at least one bit of the first bitstream therein; and
an operation unit (14) for performing an XOR operation on the bit stored in the buffer (12) and a next bit of the first bit stream, and outputting a result of the XOR operation.

10. The UWB transceiver as claimed in claim 8 or 9, wherein the demodulation unit (50) comprises:
a multiplier (52) for multiplying the second UWB wavelet series by the delayed UWB wavelet series;
an integration unit (54) for integrating a product of the second UWB wavelet series and the delayed UWB wavelet series for a time period corresponding to a UWB inter-pulse space, and outputting an integrated result; and
a bit determination unit (56) for generating bits of the data stream based on the integrated result, wherein a bit of 0 is generated when the integrated result is larger than 0 and a bit of 1 is generated when the integrated result is smaller than 0.

11. The UWB transceiver as claimed in claim 8, 9 or 10, wherein the time delay unit (40) comprises a transmission line having an electrical length providing a time delay corresponding to a UWB inter-pulse space.

12. The UWB transceiver as claimed in claim 8, 9, 10 or 11, wherein the second UWB wavelet series received by the transmission and reception unit (30) is a multiple band UWB wavelet series whose frequency band changes by pulse.

13. A method for transmitting ultra wideband (UWB) signal, the method comprising:
converting a first bitstream into a second bitstream by subjecting the first bitstream to differential phase shift keying (DPSK);
generating a UWB wavelet series based on the second bitstream, wherein a phase difference between wavelets of the UWB wavelet series is defined as 180 degrees if a bit of the second bitstream is 1 and 0 degrees if the bit of the second bitstream is 0; and
transmitting the UWB wavelet series via a wireless channel.

14. The method as claimed in claim 13, wherein the converting step comprises storing at least one bit of the first bitstream in a buffer (12), performing an XOR operation on the bit stored in the buffer (12) and a next bit of the first bitstream, and outputting a result of the XOR operation.

15. The method as claimed in claim 13 or 14, wherein the UWB wavelet series is a multiple band UWB wavelet series whose frequency band changes by pulse.

16. A method for receiving an ultra wideband (UWB) signal, the method comprising:
receiving a UWB wavelet series transmitted via a wireless channel;
delaying the UWB wavelet series for a time period corresponding to an inter-pulse space; and
generating a data stream based on a correlation of the UWB wavelet series and a delayed UWB wavelet series.

17. The method as claimed in claim 16, wherein the generating step comprises:
multiplying the UWB wavelet series by the delayed UWB wavelet series;
integrating a product of the UWB wavelet series and the delayed UWB wavelet series for a time period corresponding to a UWB inter-pulse space to generate an integrated result; and
generating bits of the data stream based on integrated result, wherein a bit of 0 is generated when the integrated result is larger than 0 and a bit of 1 is generated when the integrated result is smaller than 0.

18. The method as claimed in claim 17, wherein the delaying step comprises passing the UWB wavelet series through a transmission line having an electrical length providing a time delay corresponding to the UWB inter-pulse space.

19. The method as claimed in claim 16, 17 or 18, wherein the UWB wavelet series received in the receiving step is a multiple band UWB wavelet series whose frequency band changes by pulse.

20. A method for transmitting and receiving ultra wideband (UWB) signals comprising:
converting a first bitstream into a second bitstream by subjecting the first bitstream to differential phase shift keying (DPSK);
generating a first UWB wavelet series based on the second bitstream, wherein a phase difference between wavelets of the first UWB wavelet series is defined as 180 degrees if a bit of the second bitstream is 1 and 0 degrees if the bit of the second bitstream is 0;
transmitting the first UWB wavelet series via a wireless channel;
receiving a second UWB wavelet series via the wireless channel;
delaying the second UWB wavelet series for a time period corresponding to an inter-pulse space; and
generating a data stream based on a correlation of the second UWB wavelet series and a delayed UWB wavelet series.

21. The method as claimed in claim 20, wherein the converting step comprises storing at least one bit of the first bitstream in a buffer (12), performing an XOR operation on the bit stored in the buffer (12) and a next bit of the first bitstream, and outputting a result of the XOR operation.

22. The method as claimed in claim 20 or 21, wherein the generating step comprises multiplying the second UWB wavelet series by the delayed UWB wavelet series;
integrating a product of the second UWB wavelet series and the delayed UWB wavelet series for a time period corresponding to a UWB inter-pulse space to generate an integrated result; and
generating bits of the data stream based on the integrated result, wherein a bit of 0 is generated when the integrated result is larger than 0 and a bit of 1 is generated when the integrated result is smaller than 0.

23. The method as claimed in claim 20, 21 or 22, wherein the delaying step comprises passing the first UWB wavelet series through a transmission line having an electrical length providing a time delay corresponding to the UWB inter-pulse space.

24. The method as claimed in claim 20, 21, 22 or 23, wherein the second UWB wavelet series received in the receiving step is a multiple band UWB wavelet series whose frequency band changes by pulse.
